# EUROPEAN PATENT SPECIFICATION

(11) **EP 3 774 415 B1**
(45) Date of publication and mention of the grant of the patent: **27.08.2025**
(21) Application number: 19710870.7
(22) Date of filing: 26.02.2019
(51) Int. Cl.: B60H 1/32

(54) **TRANSPORTATION REFRIGERATION SYSTEM**
TRANSPORTKÜHLSYSTEM
SYSTÈME DE RÉFRIGÉRATION PERMETTANT LE TRANSPORT

(30) Priority: 13.04.2018 US 201862657299 P
(43) Date of publication of application: 17.02.2021
(73) Proprietor: Carrier Corporation, Palm Beach Gardens, FL 33418 (US)
(72) Inventor: KOSAKOWSKI, Chad, Palm Beach Gardens, Florida 33418 (US)
(74) Representative: Dehns
(86) International application number: PCT/US2019/019529
(87) International publication number: WO 2019/199388

(56) References cited:
- DE-U1- 9 308 132
- US-A- 5 054 295
- US-A- 5 129 235
- US-A- 5 916 253
- US-A1- 2009 077 986

## Description

### BACKGROUND

This application relates to refrigeration systems used in cargo spaces having a dividing wal ; and to a method of operation such a refrigeration system.

Refrigeration systems are known. Generally, a compressor compresses a refrigerant and delivers it into a condenser. The refrigerant is cooled and passes through an expansion valve. The refrigerant is expanded and passes through an evaporator. The evaporator cools air to be delivered into an environment to be conditioned.

One application for such refrigeration systems is in a transportation refrigeration system. As an example, a truck may have a refrigerated trailer. It is known to provide distinct temperatures at distinct compartments within a common trailer. Individual refrigeration circuits are often utilized to provide the distinct temperatures.

US 5129235 A discloses a compartmentalized transport refrigeration system wherein a partition defines a first and second cargo space and wherein first and second evaporator units are in air flow communication the first and second cargo spaces.

US 5916253 A and DE 9308132 U2 each discloses refrigeration units for use in refrigerating partitioned cargo containers.

US 2009/0077986 A1 discloses a transport refrigeration system according to the preamble of claim 1; wherein a refrigerator unit configured for a container. The refrigerator unit has an interior storage space and an exterior storage space, and the container has an interior. A rear panel with air vents faces the interior of the container and the interior storage space of the refrigerator unit is arranged between the rear panel and a front face.

### SUMMARY

According to a first aspect of the invention, a transportation refrigeration system is provided as defined by claim 1.

In a further embodiment of the above, the first cooling air outlet is spaced at least 10 inches (25 cm) from the second cooling air outlet.

In a further embodiment of any of the above, the first cooling air outlet is spaced no more than 12 inches (30 cm) from the second cooling air outlet.

In a further embodiment of any of the above, the at least one cooling passageway comprises a first cooling passageway and the at least one heat absorption heat exchanger includes a first heat absorption heat exchanger located in the first cooling passageway.

In a further embodiment of any of the above, the first cooling passageway includes a first cooling air inlet that is in fluid communication with the first heat absorption heat exchanger and the first cooling air outlet.

In a further embodiment of any of the above, the first cooling passageway includes a first fan and a first nozzle that is in fluid communication with the first fan and the first cooling air outlet.

In a further embodiment of any of the above, the at least one cooling passageway comprises a second cooling passageway and the at least one heat absorption heat exchanger includes a second heat absorption heat exchanger that is located in the second cooling passageway.

In a further embodiment of any of the above, the second cooling passageway includes a second cooling air inlet that is in fluid communication with the second heat absorption heat exchanger and the second cooling air outlet.

In a further embodiment of any of the above, the second cooling passageway includes a second fan and a second nozzle that is in fluid communication with the second fan and the second cooling air outlet.

In a further embodiment of any of the above, a fan and a nozzle is in fluid communication with the fan, the first cooling air outlet and the second cooling air outlet.

According to a second aspect of the invention, a method of operating a refrigeration cycle is provided as defined by claim 11.

In a further embodiment of any of the above, the first cooling air outlet is spaced at least 10 inches (25 cm) from the second cooling air outlet.

In a further embodiment of any of the above, the first cooling air outlet is spaced no more than 12 inches (30 cm) from the second cooling air outlet.

In a further embodiment of any of the above, the method includes adjusting a dividing wall in the cargo space along a dividing wall contact surface located between the first cooling air outlet and the second cooling air outlet.

In a further embodiment of any of the above, the first portion of the cooling air passes through a first cooling air passageway that has a first cooling air inlet that is in fluid communication with a first heat absorption heat exchanger. The first cooling air outlet and the second portion of the cooling fluid passes through a second cooling fluid passageway that has a second cooling fluid inlet that is in fluid communication with a second heat absorption heat exchanger and the second cooling air outlet.

### BRIEF DESCRIPTION OF THE DRAWINGS

Figure 1 is a schematic view illustrating a prior art refrigeration system in a cargo space.
Figure 2 is a schematic view illustrating the prior art refrigeration system of Figure 1 with a dividing wall.
Figure 3 is a schematic view illustrating a transport refrigeration system according to to an embodiment of the present invention.
Figure 4 is a schematic view of the air flow for the transport refrigeration system of Figure 3.
Figure 5 is a schematic view illustrating the transport refrigeration system of Figure 3 with a dividing wall.
Figure 6 is a schematic view illustrating a transport refrigeration system according to another embodiment of the present invention.
Figure 7 is a schematic view of the air flow for the transport refrigeration system of Figure 6.
Figure 8 is a schematic view illustrating the transport refrigeration system of Figure 6 with a dividing wall.

### DETAILED DESCRIPTION

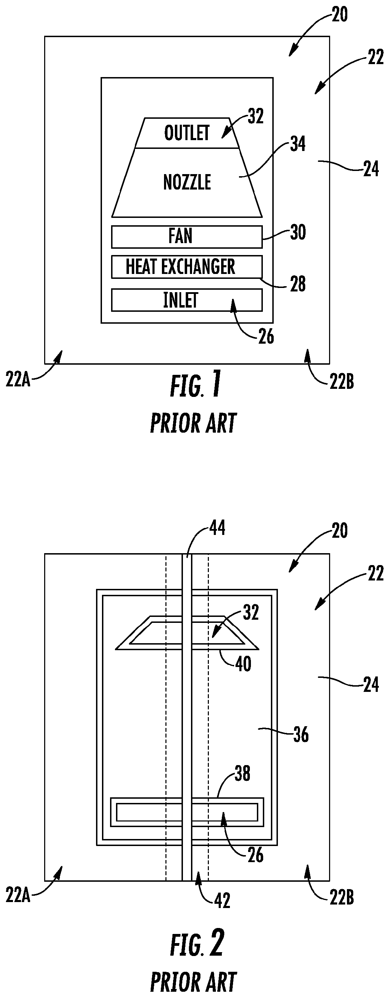

Figure 1 is a schematic view illustrating a prior art refrigeration system 20 associated with a cargo space 22. The refrigeration system 20 is located in a forward wall 24 of the cargo space 22. The refrigeration system includes an inlet 26 that directs air from the cargo space 22 past a heat absorption heat exchanger 28 to remove heat from the cargo space 22. The air from the cargo space 22 is drawn into the inlet 26 by a fan 30. The fan 30 then directs the air from the cargo space 22 into a nozzle 34 that feeds the air through an outlet 32 and back into the cargo space 22.

As shown in Figure 2, the prior art refrigeration system 20 is at least partially coved by a bulkhead 36 when used in the cargo space 22. The bulkhead 36 includes an inlet opening 38 that corresponds to the inlet 26 and an outlet opening 40 that corresponds to the outlet 32. When a dividing wall 44 is used to separate the cargo space 22 into a first compartment 22A and a second compartment 22B, the dividing wall 44 partially covers the outlet 32. During use of the cargo space 22 to transport goods, it may be necessary to make adjustments to the location of the dividing wall 44 to create more floor space in either first or second compartments 22A, 22B. The dividing wall 44 can be moved laterally anywhere in a dividing wall area 42. The dividing wall area 42 is generally 2-4 times the width of the dividing wall 44 and is at least partially defined by the dashed line in Figure 2. The dividing wall area 42 defines the area where the dividing wall 44 contacts at least the bulkhead 36 or the forward wall 24.

When the dividing wall 44 is moved laterally in the dividing wall area 42, one of the first and second compartments 22A, 22B will receive a greater amount of cooling because the portion of the outlet 32 corresponding to that compartment will be larger. Conversely, when the dividing wall 44 is moved, the other of the first and second compartments 22A, 22B will receive a smaller amount of cooling because a portion of the outlet 32 corresponding to the other of the first and second compartments 22A, 22B will be smaller. The variation in cooling can become problematic when trying to maintain a specific temperature for each of the first and second compartments 22A, 22B.

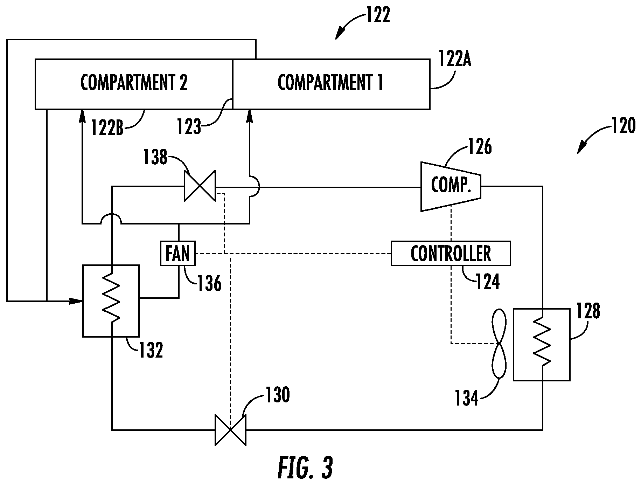

Figure 3 illustrates a transport refrigeration system 120 associated with a cargo space 122, such as a refrigerated cargo space, according to one embodiment of the present invention. In the illustrated embodiment, the cargo space 122 is divided into a first compartment 122A and a second compartment 122B by a dividing wall 123.

A controller 124 manages operation of the refrigeration system 120 to establish and regulate a desired product storage temperature within the first compartment 122A and the second compartment 122B of the cargo space 122. The cargo space 122 may be the cargo box of a trailer, a truck, a seaboard shipping container or an intermodal container wherein perishable cargo, such as, for example, produce, meat, poultry, fish, dairy products, cut flowers, and other fresh or frozen perishable products, is stowed for transport.

The refrigeration system 120 includes a refrigerant compression device 126, a refrigerant heat rejection heat exchanger 128, a first expansion device 130, a first refrigerant heat absorption heat exchanger 132, and an outlet valve 138 connected in a closed loop refrigerant circuit and arranged in a conventional refrigeration cycle. The first expansion device 130 can be an electrically controlled expansion valve controlled by the controller 124 to regulate refrigerant flow through the first heat absorption heat exchanger 132. The refrigeration system 120 also includes one or more fans 134 associated with the heat rejection heat exchanger 128 and a first fan 136 associated with the first heat absorption heat exchanger 132. In one example, the first heat absorption heat exchanger 132 is an evaporator.

It is to be understood that other components (not shown) may be incorporated into the refrigerant circuit as desired, including for example, but not limited to, a suction modulation valve, a receiver, a filter/dryer, an economizer circuit.

The heat rejection heat exchanger 128 may, for example, comprise one or more refrigerant conveying coiled tubes or one or more tube banks formed of a plurality of refrigerant conveying tubes extending between respective inlet and outlet manifolds. The fan(s) 134 are operative to pass air, typically ambient air, across the tubes of the refrigerant heat rejection heat exchanger 128 to cool refrigerant vapor passing through the tubes.

The first heat absorption heat exchanger 132 may, for example, also comprise one or more refrigerant conveying coiled tubes or one or more tube banks formed of a plurality of refrigerant conveying tubes extending between respective inlet and outlet manifolds. The first fan 136 is operative to pass air drawn from the temperature controlled cargo space 122 across the tubes of the heat absorption heat exchanger 132 to heat the refrigerant passing through the tubes and cool the air. The air cooled in traversing the heat absorption heat exchanger 132 is supplied back to the first and second compartments 122A, 122B in the cargo space 122.

Prior to entering the refrigerant compression device 126, the refrigerant passes through the outlet valve 138. The outlet valve 138 controls a pressure and state of the refrigerant entering the refrigerant compression device 126. The refrigerant compression device 126 may comprise a single-stage or multiple-stage compressor such as, for example, a reciprocating compressor or a scroll compressor.

In the refrigeration system 120, the controller 124 is configured for controlling operation of the refrigeration system 120 including, but not limited to, operation of the various components of the refrigeration system 120 to provide and maintain a desired operating temperature within the cargo space 122. The controller 124 may be an electronic controller including a microprocessor and an associated memory bank. The controller 124 controls operation of various components of the refrigeration system 120, such as the refrigerant compression device 126, the first expansion device 130, the fans 134, 136, and the outlet valve 138.

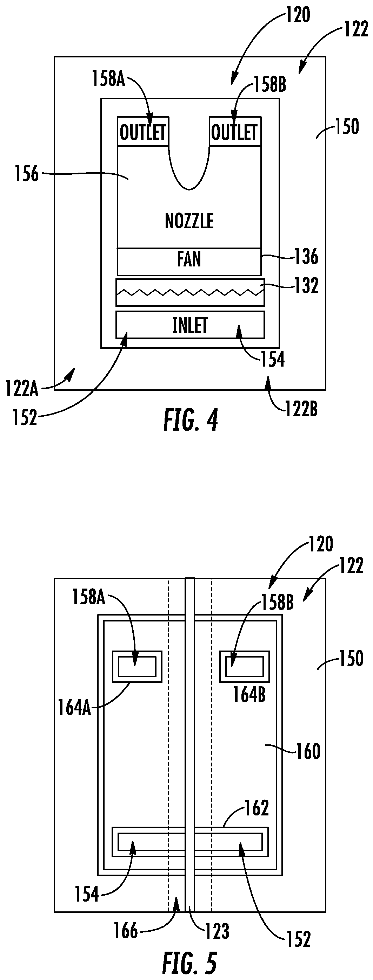

Figure 4 schematically illustrates the refrigeration system 120 located adjacent a forward wall 150 of the cargo space 122. Although the refrigeration system 120 is located in the forward wall 150 in the illustrated example, the refrigeration system 120 could be located in another wall of the cargo space 22, such as the ceiling. Air from one of the first or second compartments 122A, 122B enters a cooling passageway 152 through an inlet 154 and past a first heat absorption heat exchanger 132. The air from the cargo space 122 is drawn into the inlet 154 by the first fan 136. The first fan 136 then directs the air from the cargo space 122 into a nozzle 156 that feeds the air through a first cooling air outlet 158A and a second cooling air outlet 158B into a respective first and second compartments 122A, 122B of the cargo space 122.

Figure 5 illustrates a bulkhead 160 enclosing the refrigeration system 120 in the forward wall 150 of the cargo space 122. The bulk head 160 includes an inlet opening 162 corresponding to the inlet 154 to the cooling passageway 152 and a pair of outlet openings 164A, 164B corresponding to the first and second cooling air outlets 158A, 158B.

The first and second cooling air outlets 158A, 158B are separated by a dividing wall contact surface 166. According to the invention, the dividing wall contact surface 166 is located on the bulkhead 160 and the forward wall 150. However, in an embodiment not according to the invention, the dividing wall contact surface 166 could be located on another structure located between the first and second cooling air outlets 158A, 158B. The dividing wall 123 moves laterally along the dividing wall contact surface 166 to accommodate for more or less floor space in the first compartment 122A or the second compartment 122B. According to the invention, the dividing wall contact surface 166 is between two and four times the width of the dividing wall 123. Because the first and second cooling air outlets 158A, 158B are spaced from each other, the dividing wall 123 can move laterally along the dividing wall contact surface 166 without interfering with or partially covering either of the first and second cooling air outlets 158A, 158B.

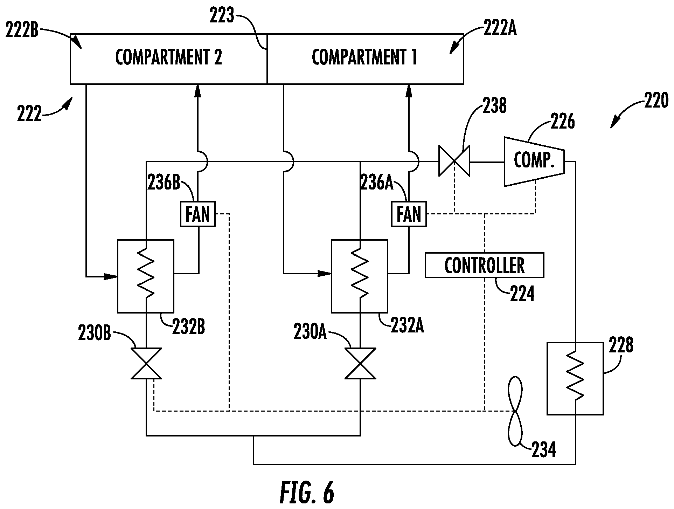

Figure 6 illustrates a transport refrigeration system 220 associated with a cargo space 222, such as a refrigerated cargo space, according to another embodiment of the present invention. In the illustrated embodiment, the cargo space 222 is divided into a first compartment 222A and a second compartment 222B by a dividing wall 223.

A controller 224 manages operation of the refrigeration system 220 to establish and regulate a desired product storage temperature within the first compartment 222A and the second compartment 222B of the cargo space 222. The cargo space 222 may be the cargo box of a trailer, a truck, a seaboard shipping container or an intermodal container wherein perishable cargo, such as, for example, produce, meat, poultry, fish, dairy products, cut flowers, and other fresh or frozen perishable products, is stowed for transport.

The refrigeration system 220 includes a refrigerant compression device 226, a refrigerant heat rejection heat exchanger 228, a first expansion device 230A, a second expansion device 230B, a first refrigerant heat absorption heat exchanger 232A, and a second refrigerant heat absorption heat exchanger 232B connected in a closed loop refrigerant circuit and arranged in a conventional refrigeration cycle. The first and second expansion devices 230A, 230B can be electrically controlled expansion valves controlled by the controller 224 to regulate refrigerant flow through each of the first and second heat absorption heat exchangers 232A, 232B, respectively. The refrigeration system 220 also includes one or more fans 234 associated with the heat rejection exchanger 228 and a first and second fan 236A, 236B associated with each of the first and second heat absorption heat exchangers 232A, 232B. In one example, the first and second heat absorption heat exchangers 232A, 232B are evaporators.

It is to be understood that other components (not shown) may be incorporated into the refrigerant circuit as desired, including for example, but not limited to, a suction modulation valve, a receiver, a filter/dryer, an economizer circuit.

The heat rejection heat exchanger 228 may, for example, comprise one or more refrigerant conveying coiled tubes or one or more tube banks formed of a plurality of refrigerant conveying tubes extending between respective inlet and outlet manifolds. The fan(s) 234 are operative to pass air, typically ambient air, across the tubes of the refrigerant heat rejection heat exchanger 228 to cool refrigerant vapor passing through the tubes.

The first and second heat absorption heat exchangers 232A, 232B may, for example, also comprise one or more refrigerant conveying coiled tubes or one or more tube banks formed of a plurality of refrigerant conveying tubes extending between respective inlet and outlet manifolds. The first and second fans 236A, 236B are operative to pass air drawn from the temperature controlled cargo space 222 across the tubes of the heat absorption heat exchangers 232A, 232B to heat the refrigerant passing through the tubes and cool the air. The air cooled in traversing the heat absorption heat exchangers 232A, 232B is supplied back to a respective first and second compartments 222A, 222B in the cargo space 222.

Prior to entering the refrigerant compression device 226, the refrigerant passes through an outlet valve 238. The outlet valve 238 controls a pressure and state of the refrigerant entering the refrigerant compression device 226. The refrigerant compression device 226 may comprise a single-stage or multiple-stage compressor such as, for example, a reciprocating compressor or a scroll compressor.

In the refrigeration system 220, the controller 224 is configured for controlling operation of the refrigeration system 220 including, but not limited to, operation of the various components of the refrigeration system 220 to provide and maintain a desired operating temperature within the cargo space 222. The controller 224 may be an electronic controller including a microprocessor and an associated memory bank. The controller 224 controls operation of various components of the refrigeration system 220, such as the refrigerant compression device 226, the first and second expansion devices 230A, 230B, the fans 234, 236A, 236B, and the outlet valve 238.

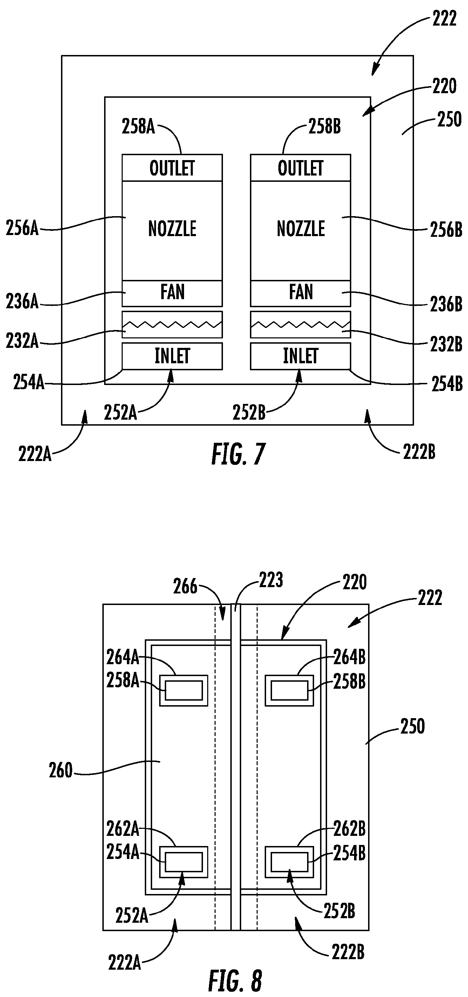

Figure 7 schematically illustrates the refrigeration system 220 located adjacent a forward wall 250 of the cargo space 222. Although the refrigeration system 220 is located in the forward wall 250 in the illustrated example, the refrigeration system 220 could be located in another wall of the cargo space 222, such as the ceiling. Air from the first and second compartments 222A, 222B enters a first and second cooling passageway 252A, 252B through a first and second inlet 254A, 254B and past the first and second heat absorption heat exchangers 232A, 232B, respectively. The air from the first and second compartments 222A, 222B is drawn into the first and second inlets 254A, 254B by the first and second fans 236A, 236B. The first and second fans 236A, 236B then directs the air from the first and second compartments 222A, 222B into a first and second nozzle 256A, 256B that feeds the air through a first and second cooling air outlet 258A, 258B into the first and second compartments 222A, 222B of the cargo space 222, respectively.

Figure 8 illustrates a bulkhead 260 enclosing the refrigeration system 220 in the forward wall 250 of the cargo space 222. The bulk head 260 includes first and second inlet openings 262A, 262B corresponding to the first and second inlets 254A, 254B to the first and second cooling passageways 252A, 252B, respectively, and first and second of outlet openings 264A, 264B corresponding to the first and second cooling air outlets 258A, 258B.

The first and second cooling air outlets 258A, 258B are separated by the dividing wall contact surface 266. According to the invention, the dividing wall contact surface 266 is located on the bulkhead 260 or the forward wall 250. However, in an embodiment not according to the invention, the dividing wall contact surface 266 could be located on another structure located between the first and second cooling air outlets 258A, 258B. The dividing wall 223 moves laterally along the dividing wall contact surface 266 to accommodate for more or less floor space in the first and second compartment 222A, 222B. According to the invention, the dividing wall contact surface 266 is between two and four times the width of the dividing wall 223. Because the first and second cooling air outlets 258A, 258B are spaced from each other, the dividing wall 223 can move laterally along the dividing wall contact surface 266 without interfering with or partially covering either of the first and second cooling air outlets 258A, 258B.

## Claims

1. A transportation refrigeration system (120; 220) comprising:
a refrigeration circuit including a compressor (126; 226), a heat rejection heat exchanger (128; 228), at least one expansion device (130; 230A, 230B), at least one heat absorption heat exchanger (132; 232A, 232B);
a cargo space (122; 222);
a bulkhead (160; 260) adjacent the refrigeration circuit, wherein the bulkhead (160; 260) encloses the refrigeration circuit in a wall of the cargo space (122; 222);
a first cooling air outlet (158A; 258A) downstream of the at least one heat absorption heat exchanger (132; 232A), wherein the bulkhead (160; 260) includes a first outlet opening (164A; 264A) corresponding to the first cooling air outlet (158A; 258A);
at least one cooling passageway (152; 252A; 252B); and
an inlet (154; 254A, 254B) of the at least one cooling passageway (152; 252A, 252B), wherein the bulkhead (160; 260) includes an inlet opening (162; 262A, 262B) corresponding to the inlet (154; 254A, 254B) of the cooling passageway (152; 252A, 252B);
**characterized by**:
a second cooling air outlet (158B; 258B) downstream of the at least one heat absorption heat exchanger (132; 232B), wherein the first cooling air outlet is spaced from the second cooling air outlet, and wherein the bulkhead (160; 260) includes a second outlet opening (164B; 264B) corresponding to the second cooling air outlet (158B; 258B); and
a dividing wall contact surface (166; 266) separating the first cooling air outlet (158A; 258A) from the second cooling air outlet (158B 258B), wherein the dividing wall contact surface (166; 266) is located on the bulkhead; and
a dividing wall (123; 223) laterally movable along the dividing wall contact surface (166; 266), wherein the dividing wall contact surface (166; 266) is between two and four times the width of the dividing wall (123; 223),
wherein the first cooling air outlet (158A; 258A) is located in a first lateral half of the bulkhead (160; 260) and the second cooling air outlet (158B; 258B) is located in a second lateral half of the bulkhead (160; 260).

2. The transportation refrigeration system (120; 220) of claim 1, wherein the first cooling air outlet (158A; 258A) is spaced at least 10 inches (25 cm) from the second cooling air outlet (158B; 258B).

3. The transportation refrigeration system (120; 220) of claim 2, wherein the first cooling air outlet (158A; 258A) is spaced no more than 12 inches (30 cm) from the second cooling air outlet (158B; 258B).

4. The transportation refrigeration system (120; 220) of claim 1, 2 or 3, wherein the at least one cooling passageway comprises a first cooling passageway (152; 252A) and the at least one heat absorption heat exchanger includes a first heat absorption heat exchanger (132; 232A) located in the first cooling passageway (152; 252A).

5. The transportation refrigeration system (120; 220) of claim 4, wherein the first cooling passageway (152; 252A) includes a first cooling air inlet (162; 262A) in fluid communication with the first heat absorption heat exchanger (132; 232A) and the first cooling air outlet (158A; 258A).

6. The transportation refrigeration system (120; 220) of claim 5, wherein the first cooling passageway (152; 252A) includes a first fan (136; 236A) and a first nozzle (156; 256A) in fluid communication with the first fan (136; 236A) and the first cooling air outlet (158A; 258A).

7. The transportation refrigeration system (220) of claim 4, wherein the at least one cooling passageway comprises a second cooling passageway (252B), and wherein the at least one heat absorption heat exchanger includes a second heat absorption heat exchanger (232B) located in the second cooling passageway (252B).

8. The transportation refrigeration system (220) of claim 7, wherein the second cooling passageway (252B) includes a second cooling air inlet (254B) in fluid communication with the second heat absorption heat exchanger (232B) and the second cooling air outlet (258B).

9. The transportation refrigeration system (220) of claim 8, wherein the second cooling passageway (252B) includes a second fan (236B) and a second nozzle (256B) in fluid communication with the second fan (236B) and the second cooling air outlet (258B).

10. The transportation refrigeration system of claim 1, further comprising a fan (136; 236A, 236B) and a nozzle (156; 256A, 256B) in fluid communication with the fan (136; 236A, 236B), the first cooling air outlet (158A; 258A), and the second cooling air outlet (158B; 258B).

11. A method of operating a refrigeration cycle comprising the steps of:
conditioning a first compartment (122A; 222A) in a cargo space (122; 222) by directing a first portion of a cooling air out of a first cooling air outlet (158A; 258A) and into the first compartment (122A; 222A);
conditioning a second compartment (122B; 222B) in the cargo space (122; 222) by directing a second portion of the cooling air out of a second cooling air outlet (158B; 258B) and into the second compartment (122B; 222B), wherein the first cooling air outlet (158A; 258A) is spaced from the second cooling air outlet (158B; 258B);
separating the first compartment (122A; 222A) from the second compartment (122B; 222B) with a dividing wall (123; 223) and separating the first cooling air outlet (158A; 258A) from the second cooling air outlet (158B; 258B) with a dividing wall contact surface (166; 266);
wherein a bulkhead (160; 260) is adjacent the first cooling air outlet (158A; 258A) and the second cooling air outlet (158B; 258B) and the dividing wall contact surface (166; 266) is located on the bulkhead;
wherein the dividing wall (123; 223) is laterally movable along the dividing wall contact surface (166; 226) to accommodate for more or less floor space in the first compartment (122A; 222A) and/or the second compartment (122B; 222B); and
wherein the dividing wall contact surface (166; 266) is between two and four times the width of the dividing wall (123; 223).

12. The method of claim 11, wherein the first cooling air outlet (158A; 258A) is spaced at least 10 inches (25 cm) from the second cooling air outlet (158B; 258B).

13. The method of claim 12, wherein the first cooling air outlet (158A; 258A) is spaced no more than twelve 12 inches (30 cm) from the second cooling air outlet (158B; 258B).

14. The method of claim 11 further comprising:
adjusting the dividing wall (123) in the cargo space (122) along a dividing wall contact surface (166; 266) located between the first cooling air outlet (158A; 258A) and the second cooling air outlet (158B; 258B).

15. The method of claim 11, wherein the first portion of the cooling air passes through a first cooling air passageway (252A) having a first cooling air inlet (262A) in fluid communication with a first heat absorption heat exchanger (232A) and the first cooling air outlet (258A) and the second portion of the cooling fluid passes through a second cooling fluid passageway (252B) having a second cooling fluid inlet (262B) in fluid communication with a second heat absorption heat exchanger (232B) and the second cooling air outlet (258B).

## Patentansprüche

1. Transportkühlsystem (120; 220), umfassend:
einen Kältekreislauf, der einen Kompressor (126; 226), einen Wärmeabgabe-Wärmetauscher (128; 228), mindestens eine Expansionsvorrichtung (130; 230A, 230B), mindestens einen Wärmeaufnahme-Wärmetauscher (132; 232A, 232B) beinhaltet;
einen Laderaum (122; 222);
eine Schottwand (160; 260) benachbart zu dem Kühlkreislauf, wobei die Schottwand (160; 260) den Kühlkreislauf in einer Wand des Laderaums (122; 222) umschließt;
einen ersten Kühlluftauslass (158A; 258A) stromabwärts des mindestens einen Wärmeaufnahme-Wärmetauschers (132; 232A), wobei die Schottwand (160; 260) eine erste Auslassöffnung (164A; 264A) beinhaltet, die dem ersten Kühlluftauslass (158A; 258A) entspricht;
mindestens einen Kühlkanal (152; 252A; 252B); und
einen Einlass (154; 254A, 254B) des mindestens einen Kühlkanals (152; 252A, 252B), wobei die Schottwand (160; 260) eine Einlassöffnung (162; 262A, 262B) beinhaltet, die dem Einlass (154; 254A, 254B) des Kühlkanals (152; 252A, 252B) entspricht;
**gekennzeichnet durch**:
einen zweiten Kühlluftauslass (158B; 258B) stromabwärts des mindestens einen Wärmeaufnahme-Wärmetauschers (132; 232B), wobei der erste Kühlluftauslass von dem zweiten Kühlluftauslass beabstandet ist und wobei die Schottwand (160; 260) eine zweite Auslassöffnung (164B; 264B) beinhaltet, die dem zweiten Kühlluftauslass (158B; 258B) entspricht; und
eine Trennwand-Kontaktfläche (166; 266), die den ersten Kühlluftauslass (158A; 258A) von dem zweiten Kühlluftauslass (158B; 258B) trennt, wobei sich die Trennwand-Kontaktfläche (166; 266) an der Schottwand befindet; und
eine Trennwand (123; 223), die seitlich entlang der Trennwand-Kontaktfläche (166; 266) bewegbar ist, wobei die Trennwand-Kontaktfläche (166; 266) zwei- bis viermal so breit ist wie die Trennwand (123; 223),
wobei sich der erste Kühlluftauslass (158A; 258A) in einer ersten seitlichen Hälfte der Schottwand (160; 260) befindet und sich der zweite Kühlluftauslass (158B; 258B) in einer zweiten seitlichen Hälfte der Schottwand (160; 260) befindet.

2. Transportkühlsystem (120; 220) nach Anspruch 1, wobei der erste Kühlluftauslass (158A; 258A) mindestens 10 Zoll (25 cm) von dem zweiten Kühlluftauslass (158B; 258B) beabstandet ist.

3. Transportkühlsystem (120; 220) nach Anspruch 2, wobei der erste Kühlluftauslass (158A; 258A) nicht mehr als 12 Zoll (30 cm) von dem zweiten Kühlluftauslass (158B; 258B) beabstandet ist.

4. Transportkühlsystem (120; 220) nach Anspruch 1, 2 oder 3, wobei der mindestens eine Kühlkanal einen ersten Kühlkanal (152; 252A) umfasst und der mindestens eine Wärmeaufnahme-Wärmetauscher einen ersten Wärmeaufnahme-Wärmetauscher (132; 232A) beinhaltet, der sich in dem ersten Kühlkanal (152; 252A) befindet.

5. Transportkühlsystem (120; 220) nach Anspruch 4, wobei der erste Kühlkanal (152; 252A) einen ersten Kühllufteinlass (162; 262A) in Fluidverbindung mit dem ersten Wärmeaufnahme-Wärmetauscher (132; 232A) und dem ersten Kühlluftauslass (158A; 258A) beinhaltet.

6. Transportkühlsystem (120; 220) nach Anspruch 5, wobei der erste Kühlkanal (152; 252A) ein erstes Gebläse (136; 236A) und eine erste Düse (156; 256A) in Fluidverbindung mit dem ersten Gebläse (136; 236A) und dem ersten Kühlluftauslass (158A; 258A) beinhaltet.

7. Transportkühlsystem (220) nach Anspruch 4, wobei der mindestens eine Kühlkanal einen zweiten Kühlkanal (252B) umfasst und wobei der mindestens eine Wärmeaufnahme-Wärmetauscher einen zweiten Wärmeaufnahme-Wärmetauscher (232B) beinhaltet, der sich in dem zweiten Kühlkanal (252B) befindet.

8. Transportkühlsystem (220) nach Anspruch 7, wobei der zweite Kühlkanal (252B) einen zweiten Kühllufteinlass (254B) in Fluidverbindung mit dem zweiten Wärmeaufnahme-Wärmetauscher (232B) und dem zweiten Kühlluftauslass (258B) beinhaltet.

9. Transportkühlsystem (220) nach Anspruch 8, wobei der zweite Kühlkanal (252B) ein zweites Gebläse (236B) und eine zweite Düse (256B) in Fluidverbindung mit dem zweiten Gebläse (236B) und dem zweiten Kühlluftauslass (258B) beinhaltet.

10. Transportkühlsystem nach Anspruch 1, ferner umfassend ein Gebläse (136; 236A, 236B) und eine Düse (156; 256A, 256B) in Fluidverbindung mit dem Gebläse (136; 236A, 236B), dem ersten Kühlluftauslass (158A; 258A) und dem zweiten Kühlluftauslass (158B; 258B).

11. Verfahren zum Betreiben eines Kältezyklus, das die folgenden Schritte umfasst:
Konditionieren eines ersten Abteils (122A; 222A) in einem Laderaum (122; 222) durch Leiten eines ersten Teils einer Kühlluft aus einem ersten Kühlluftauslass (158A; 258A) und in das erste Abteil (122A; 222A);
Konditionieren eines zweiten Abteils (122B; 222B) in dem Laderaum (122; 222) durch Leiten eines zweiten Teils der Kühlluft aus einem zweiten Kühlluftauslass (158B; 258B) und in das zweite Abteil (122B; 222B), wobei der erste Kühlluftauslass (158A; 258A) von dem zweiten Kühlluftauslass (158B; 258B) beabstandet ist;
Trennen des ersten Abteils (122A; 222A) von dem zweiten Abteil (122B; 222B) mit einer Trennwand (123; 223) und Trennen des ersten Kühlluftauslasses (158A; 258A) von dem zweiten Kühlluftauslass (158B; 258B) mit einer Trennwand-Kontaktfläche (166; 266);
wobei eine Schottwand (160; 260) benachbart zu dem ersten Kühlluftauslass (158A; 258A) und dem zweiten Kühlluftauslass (158B; 258B) liegt und sich die Trennwand-Kontaktfläche (166; 266) an der Schottwand befindet;
wobei die Trennwand (123; 223) seitlich entlang der Trennwand-Kontaktfläche (166; 226) bewegbar ist, um mehr oder weniger Bodenfläche in dem ersten Abteil (122A; 222A) und/oder dem zweiten Abteil (122B; 222B) unterzubringen; und
wobei die Trennwand-Kontaktfläche (166; 266) zwei- bis viermal so breit ist wie die Trennwand (123; 223).

12. Verfahren nach Anspruch 11, wobei der erste Kühlluftauslass (158A; 258A) mindestens 10 Zoll (25 cm) von dem zweiten Kühlluftauslass (158B; 258B) beabstandet ist.

13. Verfahren nach Anspruch 12, wobei der erste Kühlluftauslass (158A; 258A) nicht mehr als 12 Zoll (30 cm) von dem zweiten Kühlluftauslass (158B; 258B) beabstandet ist.

14. Verfahren nach Anspruch 11, ferner umfassend:
Einstellen der Trennwand (123) in dem Laderaum (122) entlang einer Trennwand-Kontaktfläche (166; 266), die sich zwischen dem ersten Kühlluftauslass (158A; 258A) und dem zweiten Kühlluftauslass (158B; 258B) befindet.

15. Verfahren nach Anspruch 11, wobei der erste Teil der Kühlluft durch einen ersten Kühlluftkanal (252A) mit einem ersten Kühllufteinlass (262A) in Fluidverbindung mit einem ersten Wärmeaufnahme-Wärmetauscher (232A) und dem ersten Kühlluftauslass (258A) strömt und der zweite Teil des Kühlfluids durch einen zweiten Kühlfluidkanal (252B) mit einem zweiten Kühlfluideinlass (262B) in Fluidverbindung mit einem zweiten Wärmeaufnahme-Wärmetauscher (232B) und dem zweiten Kühlluftauslass (258B) strömt.

## Revendications

1. Système de réfrigération permettant le transport (120 ; 220) comprenant :
un circuit de réfrigération comportant un compresseur (126 ; 226), un échangeur de chaleur à rejet de chaleur (128 ; 228), au moins un dispositif de détente (130 ; 230A, 230B), au moins un échangeur de chaleur à absorption de chaleur (132 ; 232A, 232B) ;
un espace de chargement (122 ; 222) ;
une cloison (160 ; 260) adjacente au circuit de réfrigération, dans lequel la cloison (160 ; 260) enferme le circuit de réfrigération dans une paroi de l'espace de chargement (122 ; 222) ;
une première sortie d'air de refroidissement (158A ; 258A) en aval de l'au moins un échangeur de chaleur à absorption de chaleur (132 ; 232A), dans lequel la cloison (160 ; 260) comporte une première ouverture de sortie (164A ; 264A) correspondant à la première sortie d'air de refroidissement (158A ; 258A) ;
au moins un passage de refroidissement (152 ; 252A ; 252B) ; et une entrée (154 ; 254A, 254B) de l'au moins un passage de refroidissement (152 ; 252A, 252B), dans lequel la cloison (160 ; 260) comporte une ouverture d'entrée (162 ; 262A, 262B) correspondant à l'entrée (154 ; 254A, 254B) du passage de refroidissement (152 ; 252A, 252B) ;
**caractérisé par** :
une seconde sortie d'air de refroidissement (158B ; 258B) en aval de l'au moins un échangeur de chaleur à absorption de chaleur (132 ; 232B), dans lequel la première sortie d'air de refroidissement est espacée de la seconde sortie d'air de refroidissement et dans lequel la cloison (160 ; 260) comporte une seconde ouverture de sortie (164B ; 264B) correspondant à la seconde sortie d'air de refroidissement (158B ; 258B) ; et
une surface de contact de paroi de séparation (166 ; 266) séparant la première sortie d'air de refroidissement (158A ; 258A) de la seconde sortie d'air de refroidissement (158B 258B), dans lequel la surface de contact de paroi de séparation (166 ; 266) est située sur la cloison ; et
une paroi de séparation (123 ; 223) mobile latéralement le long de la surface de contact de paroi de séparation (166 ; 266), dans lequel la surface de contact de paroi de séparation (166 ; 266) est entre deux et quatre fois la largeur de la paroi de séparation (123 ; 223),
dans lequel la première sortie d'air de refroidissement (158A ; 258A) est située dans une première moitié latérale de la cloison (160 ; 260) et la seconde sortie d'air de refroidissement (158B ; 258B) est située dans une seconde moitié latérale de la cloison (160 ; 260).

2. Système de réfrigération permettant le transport (120 ; 220) selon la revendication 1, dans lequel la première sortie d'air de refroidissement (158A ; 258A) est espacée d'au moins 10 pouces (25 cm) de la seconde sortie d'air de refroidissement (158B ; 258B).

3. Système de réfrigération permettant le transport (120 ; 220) selon la revendication 2, dans lequel la première sortie d'air de refroidissement (158A ; 258A) est espacée de pas plus de 12 pouces (30 cm) de la seconde sortie d'air de refroidissement (158B ; 258B).

4. Système de réfrigération permettant le transport (120 ; 220) selon la revendication 1, 2 ou 3, dans lequel l'au moins un passage de refroidissement comprend un premier passage de refroidissement (152 ; 252A) et l'au moins un échangeur de chaleur à absorption de chaleur comporte un premier échangeur de chaleur à absorption de chaleur (132 ; 232A) situé dans le premier passage de refroidissement (152 ; 252A).

5. Système de réfrigération permettant le transport (120 ; 220) selon la revendication 4, dans lequel le premier passage de refroidissement (152 ; 252A) comporte une première entrée d'air de refroidissement (162 ; 262A) en communication fluidique avec le premier échangeur de chaleur à absorption de chaleur (132 ; 232A) et la première sortie d'air de refroidissement (158A ; 258A).

6. Système de réfrigération permettant le transport (120 ; 220) selon la revendication 5, dans lequel le premier passage de refroidissement (152 ; 252A) comporte un premier ventilateur (136 ; 236A) et une première buse (156 ; 256A) en communication fluidique avec le premier ventilateur (136 ; 236A) et la première sortie d'air de refroidissement (158A ; 258A).

7. Système de réfrigération permettant le transport (220) selon la revendication 4, dans lequel l'au moins un passage de refroidissement comprend un second passage de refroidissement (252B) et dans lequel l'au moins un échangeur de chaleur à absorption de chaleur comporte un second échangeur de chaleur à absorption de chaleur (232B) situé dans le second passage de refroidissement (252B).

8. Système de réfrigération permettant le transport (220) selon la revendication 7, dans lequel le second passage de refroidissement (252B) comporte une seconde entrée d'air de refroidissement (254B) en communication fluidique avec le second échangeur de chaleur à absorption de chaleur (232B) et la seconde sortie d'air de refroidissement (258B).

9. Système de réfrigération permettant le transport (220) selon la revendication 8, dans lequel le second passage de refroidissement (252B) comporte un second ventilateur (236B) et une seconde buse (256B) en communication fluidique avec le premier second ventilateur (236B) et la seconde sortie d'air de refroidissement (258B).

10. Système de réfrigération permettant le transport selon la revendication 1, comprenant également un ventilateur (136 ; 236A, 236B) et une buse (156 ; 256A, 256B) en communication fluidique avec le ventilateur (136 ; 236A, 236B), la première sortie d'air de refroidissement (158A; 258A) et la seconde sortie d'air de refroidissement (158B ; 258B).

11. Procédé de fonctionnement d'un cycle de réfrigération comprenant les étapes de :
conditionnement d'un premier compartiment (122A ; 222A) dans un espace de chargement (122 ; 222) en dirigeant une première partie d'un air de refroidissement hors d'une première sortie d'air de refroidissement (158A; 258A) et dans le premier compartiment (122A ; 222A) ;
conditionnement d'un second compartiment (122B ; 222B) dans l'espace de chargement (122 ; 222) en dirigeant une seconde partie de l'air de refroidissement hors d'une seconde sortie d'air de refroidissement (158B ; 258B) et dans le second compartiment (122B ; 222B), dans lequel la première sortie d'air de refroidissement (158A ; 258A) est espacée de la seconde sortie d'air de refroidissement (158B ; 258B) ;
séparation du premier compartiment (122A ; 222A) du second compartiment (122B ; 222B) avec une paroi de séparation (123 ; 223) et séparation de la première sortie d'air de refroidissement (158A ; 258A) de la seconde sortie d'air de refroidissement (158B ; 258B) avec une surface de contact de paroi de séparation (166 ; 266) ;
dans lequel une cloison (160 ; 260) est adjacente à la première sortie d'air de refroidissement (158A; 258A) et la seconde sortie d'air de refroidissement (158B ; 258B) et la surface de contact de paroi de séparation (166 ; 266) est située sur la cloison ;
dans lequel la paroi de séparation (123 ; 223) est mobile latéralement le long de la surface de contact de paroi de séparation (166 ; 226) pour s'adapter à plus ou moins d'espace au sol dans le premier compartiment (122A ; 222A) et/ou le second compartiment (122B ; 222B) ; et
dans lequel la surface de contact de paroi de séparation (166 ; 266) est entre deux et quatre fois la largeur de la paroi de séparation (123 ; 223).

12. Procédé selon la revendication 11, dans lequel la première sortie d'air de refroidissement (158A ; 258A) est espacée d'au moins 10 pouces (25 cm) de la seconde sortie d'air de refroidissement (158B ; 258B).

13. Procédé selon la revendication 12, dans lequel la première sortie d'air de refroidissement (158A ; 258A) est espacée de pas plus de 12 pouces (30 cm) de la seconde sortie d'air de refroidissement (158B ; 258B).

14. Procédé selon la revendication 11, comprenant également :
l'ajustement de la paroi de séparation (123) dans l'espace de chargement (122) le long d'une surface de contact de paroi de séparation (166 ; 266) située entre la première sortie d'air de refroidissement (158A; 258A) et la seconde sortie d'air de refroidissement (158B ; 258B).

15. Procédé selon la revendication 11, dans lequel la première partie de l'air de refroidissement passe à travers un premier passage d'air de refroidissement (252A) ayant une première entrée d'air de refroidissement (262A) en communication fluidique avec un premier échangeur de chaleur à absorption de chaleur (232A) et la première sortie d'air de refroidissement (258A) et la seconde partie du fluide de refroidissement passe à travers un second passage de fluide de refroidissement (252B) ayant une seconde entrée de fluide de refroidissement (262B) en communication fluidique avec un second échangeur de chaleur à absorption de chaleur (232B) et la seconde sortie d'air de refroidissement (258B).
